# EUROPEAN PATENT SPECIFICATION

(11) **EP 1 320 217 B1**
(45) Date of publication and mention of the grant of the patent: **13.10.2004**
(21) Application number: 01129865.0
(22) Date of filing: 14.12.2001
(51) Int. Cl.: H04L 12/24, G06F 11/20

(54) **Method of installing monitoring agents, system and computer program for monitoring objects in an IT network**
Verfahren zum Installieren Überwachungsagenten, System und Computerprogramm von Objekten in einem IT-Netz Überwachung
Procédé d'installation d'agents de surveillance, système et logiciel pour surveiller des objects dans un réseau de technologie de l'information

(43) Date of publication of application: 18.06.2003
(73) Proprietor: Hewlett-Packard Company, A Delaware Corporation, Palo Alto, California 94304-1112 (US)
(72) Inventor: Vosseler, Frank, 71155 Altdorf (DE)
(74) Representative: Lippich, Wolfgang, Dipl.-Phys, Dr.rer.nat.

(56) References cited:
- WO-A-01/84313
- US-A- 6 088 727
- ZHENGYU LIANG ET AL: "ClusterProbe: an open, flexible and scalable cluster monitoring tool" CLUSTER COMPUTING, 1999. PROCEEDINGS. 1ST IEEE COMPUTER SOCIETY INTERNATIONAL WORKSHOP ON MELBOURNE, VIC., AUSTRALIA 2-3 DEC. 1999, LOS ALAMITOS, CA, USA,IEEE COMPUT. SOC, US, 2 December 1999 (1999-12-02), pages 261-268, XP010365648 ISBN: 0-7695-0343-8
- JOHNSON J T: "DISTRIBUTED SMARTS: AGENTS LOWER NETWORK LOAD" DATA COMMUNICATIONS, MCGRAW HILL. NEW YORK, US, vol. 24, no. 9, 1 July 1995 (1995-07-01), pages 39-40, XP000523345 ISSN: 0363-6399

## Description

The present invention relates generally to the monitoring of an information technological (IT) network, and more particularly to a method, system and a computer program of installing monitoring agents on monitored nodes for monitoring objects in an IT network.

Nowadays, as information systems become ubiquitous, and companies and organizations of all sectors become drastically dependent on their computing resources, the requirement for the availability of the hardware components and software components (applications) of an IT network and of services based on it, (hereinafter all three are generally referred to as "objects") is increasing while the complexity of IT networks is growing.

There are monitoring systems available which enable the availability and performance of objects within an IT network to be monitored and managed.

For example, Hewlett-Packard offers such a product family under the name "HP OpenView". A personal computer, node, network interconnect device or any system with a CPU is called a node. The nodes of an IT network monitored by such a monitoring system are called monitored nodes. On a monitored node or somewhere in the network with access to the monitored node, a program or process runs as a background job which monitors the occurrence of certain events (e.g. application errors) at the node and generates event-related messages according to a "policy", i.e. according to a set of instructions and/or rules which can be defined by a user. Such a program or process is called an "agent". An agent is not limited to passive monitoring, e.g. by collecting error messages. Rather, it can carry out active monitoring of hardware and processes. For example, an agent can periodically (e.g. every five minutes) send requests to a process (e.g. an Oracle process) to find out whether the process is still running. A response saying that the process is no more running (or the absence of a response) may also constitute an "event". The messages generated by the agents are collected by a monitoring server which stores and processes them and routes the processing results to a monitoring console by means of which an IT administrator or operator can view the status and/or performance of the IT objects.

A monitoring system of that kind increases the availability of the IT objects under consideration since it enables a fault or failure of a component of the monitored network to be quickly detected so that repair action or the like can immediately be started.

However, for many mission or business-critical applications, the level of availability achieved by monitoring alone is not sufficient. This class of services includes online transaction processing, electronic commerce, Internet/World Wide Web, data warehousing, decision support, telecommunication switches, Online Analytical Processing, and control systems. Such applications generally run 24 hours a day. The nodes on which these applications are executed must run perpetually and, therefore, demand high availability.

There are many different concepts for providing high availability IT services (see J.V. Carreira et al.: "Dependable Clustered Computing", in: R. Buyya (Editor): High Performance Cluster Computing, Architectures and Systems, Vol. 1, 1999, pages 94-115). One of these concepts uses a cluster of at least two nodes. In what is called an active/standby configuration, one or more critical applications or parts of applications, run on one of the two nodes, the first or primary node. A cluster operating system checks permanently whether a "failover" condition (e.g. a failure or an error, which constitutes a forewarning of a failure, of the critical application or a hardware resource impairing it) has occurred. If such a failover condition in the primary node is detected, the critical application(s) is switched to the other node, the second or secondary node, thus avoiding downtime and guaranteeing the availability of the application(s), which is therefore also denoted as "protected application". When the primary node has been repaired (after a failure), the critical application can be switched back from the secondary node to the primary node (see Carreira, pages 94-115, in particular pages 102-103). The application or part of an application which forms a logically connected entity in a "cluster view" and is switched from one the other node in the case of failover, is also called "cluster package". Such HA clusters are advantageous compared to conventional specialized hardware-redundant platforms which are hardware-redundant on all levels (including power supplies, I/O ports, CPU's, disks, network adapters and physical networks) in order to individually eliminate any single point of failure within the platform, since they require the use of proprietary hardware and software. In contrast, the cluster solution allows users to take advantage of off-the-shelf industry standard and cheap components.

The supervision performed by the cluster operating system as to whether a failover condition has occurred and the monitoring of the network objects carried out simultaneously and independently by the monitoring system have to be differentiated from each other. The first one is a specialized task carried out within the cluster by a cluster operating system. An example of such tasks carried out by a cluster operating system is described in WO 01/84313 A2. A cluster is formed of a set of single resources. This resources are monitored on each of the nodes by agents. With the detection of a failure of a critical resource it is decided to fail-over (i.e. to switch) an application concerned from one machine to another machine of the cluster. Events may also be published so that other interested applications and management agents can learn of status changes and reassignments of components (page 17, line 28 - page 18, line 2).

The monitoring of the network objects carried out simultaneously and independently by the monitoring system, is a platform-independent application capable of monitoring complex networks as a whole and of being easily adapted to networks of different topologies. Monitoring systems, such as the HP OpenView system, also allow the monitoring of such high availability (HA) clusters. Both cluster nodes are then provided with a respective agent. Each of these agents monitors the occurrence of events relating to the monitored application and generates event-related messages. Both agents permanently check whether the application under consideration is running. Since the monitored application runs only on one of the two cluster nodes at a time, one of the two agents permanently generates messages indicating that the application is not running, although it is intended that the application is not running on that node. The messages from both agents are processed upstream by the monitoring server which takes into account on which one of the two nodes the application is intended to be currently active. This way of processing the monitoring messages is relatively complicated.

In order to avoid the need for the monitoring server to process "false" error messages, a "work-around" solution has been proposed according to which the user can modify the cluster package software in such a way that it reconfigures both agents in the case of a failover so as to avoid the generation of "false" error messages.

The invention provides a method of installing monitoring agents on monitored nodes for monitoring objects within an IT network. The IT network has non-cluster nodes and at least one HA cluster comprising a first and a second cluster nodes. At least one cluster package is arranged to run on the high-availability cluster, wherein a cluster operating system initiates, when a failover condition is detected for the cluster package at the first cluster node, a failover to the second cluster node is initiated. The monitoring agents monitor the occurrence of events and generate event-related messages for a monitoring server. First and a second monitoring agents associated with the first and second cluster nodes form a monitoring agent system of the cluster. The first and second agents of the monitoring agent system are arranged to receive information from the cluster operating system of the high-availability cluster indicating whether the cluster package is currently active on the first or second cluster node, respectively.

Depending on the cluster-package-activity information, the monitoring activity relating to the cluster package is activated in the one of the first and second agents associated with the cluster node on which the cluster package is currently active and is de-activated in the other one. The method comprises: automatically adapting, upon installation, the monitoring agents which are installed on the cluster nodes such that they are arranged to receive the cluster-package-activity information and exhibit said dependency of their monitoring activity on cluster-package-activity information, whereas the monitoring agents which are installed on the non-cluster nodes are arranged not to exhibit a dependency of their monitoring activity on cluster-package-activity.

According to another aspect, the invention provides a system for monitoring objects within an IT network includes a monitoring server and monitored nodes. The system comprises non-cluster nodes and at least one HA cluster which comprising: first and a second cluster nodes; a cluster operating system which initiates, when a failover condition is detected for a cluster package running on the first cluster node, a failover to the second cluster node; and monitoring agents which, when installed on the non-cluster nodes or the cluster nodes monitor the occurrence of events and generate event-related messages for the monitoring server. First and second monitoring agents installed on and associated with the cluster nodes form a monitoring agent system of the cluster. The first and second agents receive information from the cluster operating system indicating whether the cluster package is currently active on the associated cluster node. Depending on that information, the monitoring activity relating to the cluster package is activated in the one of the first and second agents which is associated with the cluster node on which the cluster package is currently active and is de-activated in the other one. The agents are automatically adapted, upon installation on a cluster node, to receive the cluster-package-activity information and exhibit said dependency of their monitoring activity on cluster-package-activity information, but, upon installation on a non-cluster node, not to exhibit a dependency of their monitoring activity on cluster-package-activity.

According to still another aspect, the invention is directed to a computer program including program code for execution on a network comprising a monitoring server and monitored nodes, including non-cluster nodes (2) and at least one HA cluster comprising first and second cluster nodes. A cluster operating system initiates, when a failover condition is detected for a cluster package running on the first cluster node, a failover to the second cluster node. The program code constitutes, when installed on the non-cluster nodes or the cluster nodes an agent for monitoring the occurrence of events and generating event-related messages for the monitoring server. First and second agents, when installed on the cluster nodes of the cluster, form a monitoring agent. The first and second agents receive information from the cluster operating system indicating whether the cluster package is currently active on the associated cluster node. Depending on that information, the monitoring activity relating to the cluster package is activated in the one of the first and second agents which is associated with the cluster node on which the cluster package is currently active and is de-activated in the other one. The agents are automatically configured, upon installation on a cluster node, to receive the cluster-package-activity information and exhibit said dependency of their monitoring activity on cluster-package-activity information, but, upon installation on a non-cluster node, not to exhibit a dependency of their monitoring activity on cluster-package-activity.

Other features are inherent in the disclosed method, system and computer program or will become apparent to those skilled in the art from the following detailed description of embodiments and its accompanying drawings.

In the accompanying drawings:
- Fig. 1: shows a high-level architecture diagram of a monitored IT network;
- Figs. 2a, b: illustrate a first example of a monitored HA cluster with one monitored cluster package;
- Figs. 3a, b: illustrate a second example of a monitored HA cluster with two monitored cluster packages and a bi-directional failover functionality;
- Fig. 4: is a flow chart of a method carried out by an agent in the embodiment of Figs. 2a, b.
- Fig. 5: illustrates an agent deployment process.

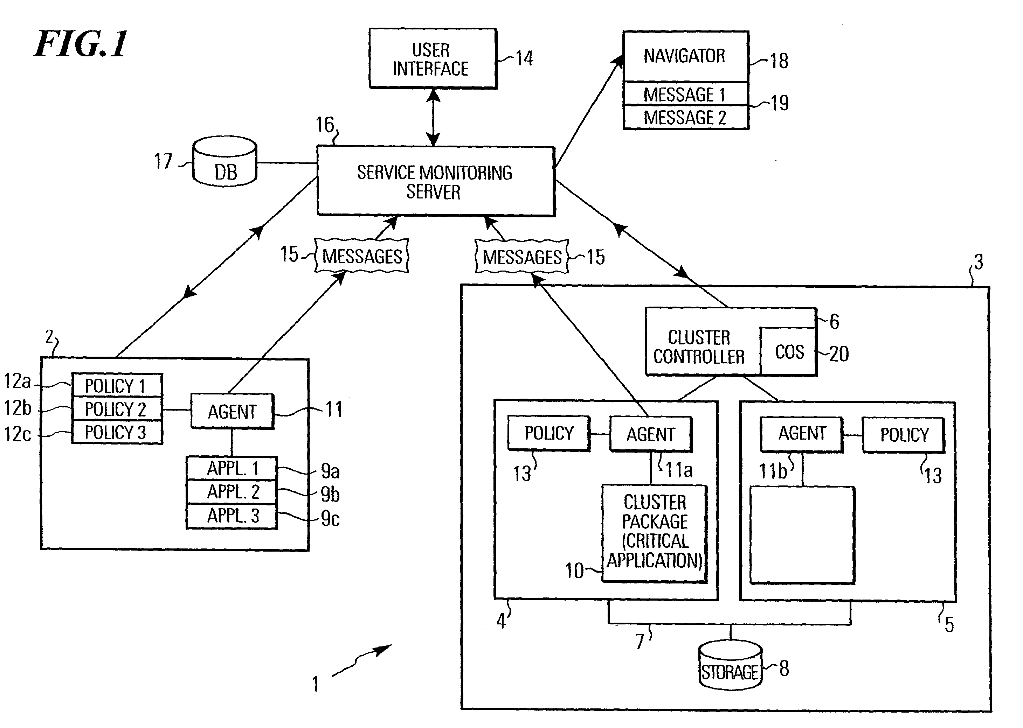

Fig. 1 shows a high-level architecture diagram of a monitored IT network. Before proceeding further with the description, however, a few items of the preferred embodiments will be discussed.

In the preferred embodiments, objects of an information technical (IT) network are monitored as to their availability and performance by a monitoring system. (The term "IT network" also includes telecommunication networks). Such monitored objects comprise hardware devices, software and services. A node is a network object such as a PC, node or any system with a CPU. A node is called a "monitored node" if it and/or applications or processes running on it are monitored by the monitoring system. Services are, for example, customer-based or user-oriented capabilities provided by one or more hardware or software components within a computing environment. For instance, services can be commercial applications (such as Oracle), Internet node applications (such as Microsoft Exchange), or internal (e.g. operating-system-related) services.

The monitoring may comprise passive monitoring (e.g. collecting error messages produced by the objects) or active monitoring (e.g. by periodically sending a request to the object and checking whether it responds and, if applicable, analyzing the contents of the response). Preferably, a monitoring of applications is carried out, rather than a simple resource monitoring. Besides pure monitoring tasks, in the preferred embodiments the monitoring system can also carry out management tasks, such as error correcting or fixing tasks, setting tasks and other network services control tasks.

An event is a (generally unsolicited) notification, such as an SNMP trap, CMIP notification or TL1 event, generated e.g. by a process in a monitored object or by a user action or by an agent. Typically, an event represents an error, a fault, change in status, threshold violation, or a problem in operation. For example, when a printer's paper tray is empty, the status of the printer changes. This change results in an event. An "event" may also be established by a certain state change in the monitored object detected by active monitoring.

An agent is a program or process running on a remote device or computer system. An agent communicates with other software, for example it responds to monitoring or management requests, performs monitoring or management operations and/or sends event notification. In the preferred embodiments, the agents are designed to run on the monitored nodes. In other preferred embodiment, the agents run nodes that are remote from the monitored node. There may be one agent for each monitored cluster package. In other embodiments, one agent can monitor several cluster packages. If several cluster packages or processes run on the same cluster node, they will be preferably monitored by one and the same agent associated with this cluster node. The agent is configured by a set of specifications and rules, called policy, for each cluster package application or process to be monitored. Policies can be user-defined. A policy tells the agent what to look for and what to do when an event occurs (and, what events to trigger, if the agent carries out active monitoring). For example, according to a particular policy, an agent filters events and generates messages which inform the monitoring server about the occurrence of certain events and/or the status and performance of the monitored application or process. The monitoring server collects event and performance data, processes them and routes the results to a monitoring console (a user interface). In the preferred embodiments, the monitoring server also centrally deploys policies, deployment packages, and agents, as directed by the user, and stores definitions and other key parameters. In the preferred embodiments, services are monitored platform-independently. For example, different operating systems can be implemented on the various monitored nodes.

In a high-availability (HA) cluster there is a primary node on which the critical application runs, and a secondary node which serves as a backup for the critical application. However, generally, only a part of one or more applications (for example, a part of an SAP application) runs on a cluster node and is backed up by the secondary node. The application or part of an application which forms a logically connected entity in a cluster view and is backed up, is also called "cluster package". The two cluster nodes are interconnected. If a failover condition is detected, a cluster operating system initiates the switching of the critical application, the cluster package, from the primary to the secondary node. The HA cluster is transparent for the rest of the IT network in the sense that it appears to the "outside" as a corresponding standard (non-cluster) node.

A failover condition is a failure of the critical application or a resource, on which it depends, for example, if the critical application produces no or incorrect results, e.g. due to software faults (bugs) or due to hardware failures, such as a crash of a disk that the application needs. Preferably, a failover is initiated before such a serious failure occurs. This can be done if already a kind of forewarning, which is called an "error", constitutes a failover condition. For example, some time before the external behavior of a system is affected, a part of its internal state may deviate from the correct value. If such an error is detected, which can be, for instance, an internal program variable with an invalid value, a failover can be carried out before the failure occurs. Another error which has such forewarning characteristics and can therefore be used as a failover condition is a decline in the performance of a hardware device.

In embodiments with only one monitored cluster package, or with several monitored cluster packages which, however, normally run on one and the same cluster node, the HA cluster is in an Active/Standby configuration. In this scheme, only the primary node is active, whereas the secondary node is in standby mode. The two machines do not need to be absolutely identical: The back-up machine just needs the necessary resources (disk, memory, connectivity etc.) to support the critical application(s). It can be a lower-performance machine as it only needs to keep the application(s) running while the primary node is repaired after a failover. Likewise, an Active/Active configuration can be used, wherein all nodes and the cluster are active and do not sit idle waiting for a failover to occur. For instance, an application A can run on node X and an application B on node Y. Then, node Y can backup the application A from node X, and node X can backup the application B from node Y. The solution is sometimes referred to as providing bi-directional failover. This Active/Active model can be extended to several active nodes that backup one another. However, it is common to these different models that, when referring to a particular application, one node can be considered active (this is the node on which the particular application is running) and the other node as being in the standby mode for this particular application. Therefore, in the present specification, the expression "the node is active / in the standby mode" means that it is active or in the standby with respect to a particular critical application cluster package under consideration, but does not necessarily mean that the machine itself is generally active or in the standby mode.

The HA clusters of the preferred embodiments can be likewise configured according to what is called the share-nothing cluster model or the share-storage cluster model. In the share-nothing cluster model, each cluster node has its own memory and is also assigned its own storage resources. Share-nothing clusters may allow the cluster nodes to access common storage devices or resources. In both models, a special storage interconnect can be used.

The HA clusters of the preferred embodiments use available cluster operating systems, such as Hewlett Packard MC/Serviceguard, Microsoft Cluster Node (formerly codenamed Wolfpack) or VeritasCluster. Further, for a particular application (such as Oracle Database) a definition has to be provided of what must happen when a failover occurs. Such software can be considered as an interface between the cluster operating system and the particular critical application and forms part of the cluster package. For example, for the Oracle Database the corresponding software is "Oracle Clusterpackage". Commonly, such "failover middleware" is a part of the respective critical application.

In the preferred embodiments, the agent system is constituted by at least one agent for each cluster node of a monitored cluster. The agents actively or passively receive information indicating whether the cluster package is currently active on the associated cluster node. The monitoring and the receipt of this information are separate tasks which are carried out in parallel and independently. Based on this information, the message generation for the respective cluster package is activated or de-activated. An agent is activated to monitor the application (and, thus, generates monitoring messages) when the cluster package is active on the cluster node associated with the agent, and an agent is de-activated (and, thus, generates no erroneous monitoring messages indicating that the cluster package is unavailable) when the cluster package is unavailable on the cluster node associated with the agent. This solution can be based on standard agents and standard policies, such as those which can be used with non-cluster nodes, and does not require modifications of the cluster package software.

In the preferred embodiments, the agents receive this information from the cluster operating system. In order to receive said information, in one embodiment the agent periodically sends a corresponding request to the cluster operating system, and receives a corresponding response from it which indicates whether the associated cluster node is active or inactive. In another embodiment, the agent is registered at the cluster operating system upon initialization, which then notifies the agent periodically and/or in the case of a change about the activity status of the associated cluster package.

As already mentioned above, the expressions "active" and "inactive" or "standby" may refer either to a cluster node as a whole or a particular cluster package.

In the preferred embodiments, the agent of a cluster node generates messages according to monitoring rules. In the most preferred embodiments, there is also at least one overlaid rule which pertains to cluster package activity. This rule is generally not part of the policy containing the monitoring rules, but it is associated with the policy and the monitored cluster package. The overlaid rule causes the agent not to evaluate the monitoring rules (i.e. not to generate erroneous monitoring messages) if the information received from the cluster operating system indicates that the monitored cluster package is inactive on the associated cluster node.

In the preferred embodiments, the agents monitor the cluster package on the associated cluster nodes and generate messages according to a policy which includes monitoring rules. These rules can be defined by a user. The set of available rules for monitored clusters is preferably the same as (or at least comprises) the set of rules for monitored non-cluster nodes. In other words, a cluster is transparent for the user who wants to define rules for the monitoring task of an agent. The user can define the monitoring task for a monitored cluster as if it were a standard (non-cluster) node.

As mentioned above, there is a difference between monitoring non-cluster nodes and clusters: In the most preferred embodiments, an agent, which is associated with a cluster node in standby mode, generates no erroneous error messages indicating that the monitored cluster package is not running on that node, whereas an agent of a non-cluster node is commonly permanently ready to generate monitoring messages.This functionality, i.e. the ability to receive said information and to exhibit the above-described dependency of the message generation on the activity state of the associated cluster node with regard to the monitored cluster package is automatically provided upon the installation of the agent and/or the policies (in some embodiments, the user may be required to expressly indicate to the system that the agent shall operate on a cluster node rather than on a non-cluster node). This allows the user to define the policies for a cluster in the same way as for a non-cluster node.

The preferred embodiments of the computer program comprise program code which, for example, is stored on a computer-readable data carrier or is in the form of signals transmitted over a computer network. The preferred embodiments of the program code are written in an object-oriented programming language (e.g. Java or C++). The program code can be loaded (if needed, after compilation) and executed in a digital computer or in networked computers, e.g. a monitoring server networked with monitored nodes.

In the preferred embodiments, the software has a central deployment functionality: the user can assign one or more policies to a monitored node from a user interface (console) and the program code automatically installs ("deploys") the intelligent agents and policies at the cluster node. Upon installation the agents and/or policies are automatically adapted to the requirements of the monitored node. For example, the overlaid rule which obscures the package status by inactivating message generation is automatically added to the standard monitoring rules, and also the agent's interface to the cluster operating system for the receipt of the activity information which is one of the two types (periodical request or registration) is automatically installed. Thus, the agent and policy deployment to a cluster is transparent for the user, and requires no additional manual intervention.

Returning now to Fig. 1, it shows a high-level architecture diagram of a preferred embodiment of a service monitoring system 1. The system 1 comprises two monitored nodes, namely a non-cluster node 2 and a high-availability (HA) cluster 3. The HA cluster 3 is constituted of two nodes, a primary cluster node 4 and a secondary cluster node 5, as well as a cluster controller 6 with a cluster operating system (COS) 20, a storage interconnect 7 and a cluster storage 8. The node 2 and the HA cluster 3 are a part of a monitored IT network. Non-critical applications or services 9a-c run on the node 2. A critical application 10, also called cluster package, runs on the primary cluster node 4 of the HA cluster 3. A monitoring software component 11 (an "agent") is installed on each of the monitored nodes 2, 4, 5 which runs automatically as a background task. The agents 11 receive event notifications and collect performance data from the monitored applications and services 9a-c, 10 and from hardware resources used by them. They collect and evaluate these event notifications and performance data according to policies 12a-c, 13. The policies comprise sets of collection and evaluation rules which are defined by a user via a user interface 14. Although there is only one agent 11 per monitored node 2, 4, 5, there is one policy 12, 13 per monitored application or cluster package 9, 10. Therefore, in Fig. 1 there are three policies 12a-12c associated with the agent 11 which monitors the three applications 9a-c, whereas there is only one policy 13 associated with the agent 11a since, in Fig. 1, it monitors only one application (cluster package) 10. It is likewise possible that several (1, 2, 3 ... M) policies are associated with one application. For example, there may be one policy defining the monitoring of processes relating to the application, and another policy for defining the monitoring of the application's logfile.

Depending on which events occur and what is indicated by the collected data, the agents 11, 11a filter and evaluate them according to the policies 12, 13, and send monitoring messages 15 to a service monitoring server 16 which stores the messages in a monitoring database 17, processes them and sends the messages and the processing results to a navigator display 18 including a message browser 19. In the navigator display 18, the network and the services provided by it are visualized for the user in the form of a two-dimensional network and service map showing the status of the individual monitored services. In the message browser 19 the most relevant messages are displayed. The user can add rules by the user interface 14 which define how the service monitoring server 16 is to process the messages 15.

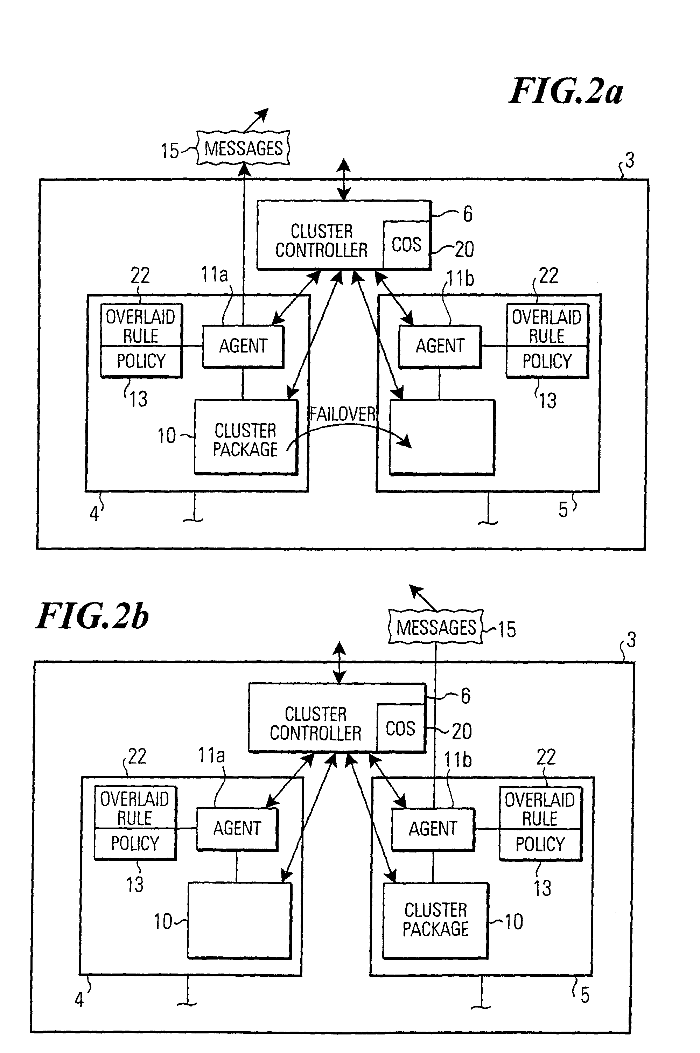

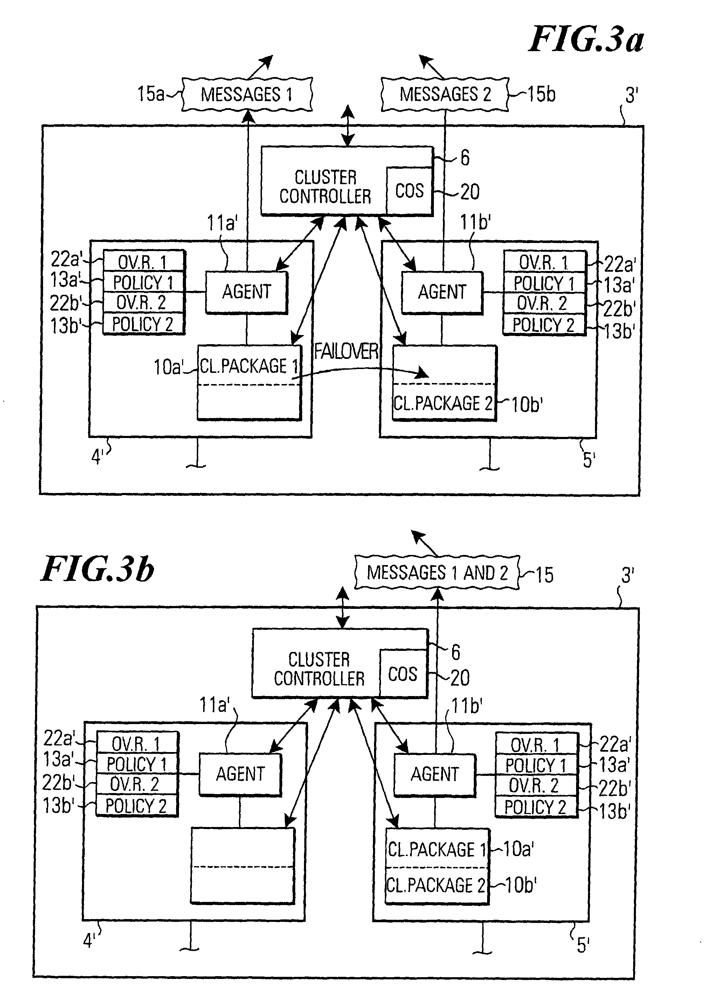

In the HA cluster 3, the cluster package 10 is shown to be active on the primary cluster node 4 and inactive on the secondary cluster node 5. Although an agent 11b is installed on the standby cluster node 5, it does not generate erroneous monitoring messages due to notification data received from the cluster operating system 20 which tell the agent 11b that the monitored cluster package 10 is currently inactive on its associated node 5. Rather, based on the notification data, only the agent 11a associated with the cluster node 4 on which the cluster package 10 is currently active generates monitoring messages 15 relating to the cluster package 10. More detailed views of the HA cluster are shown in Figs. 2 and 3.

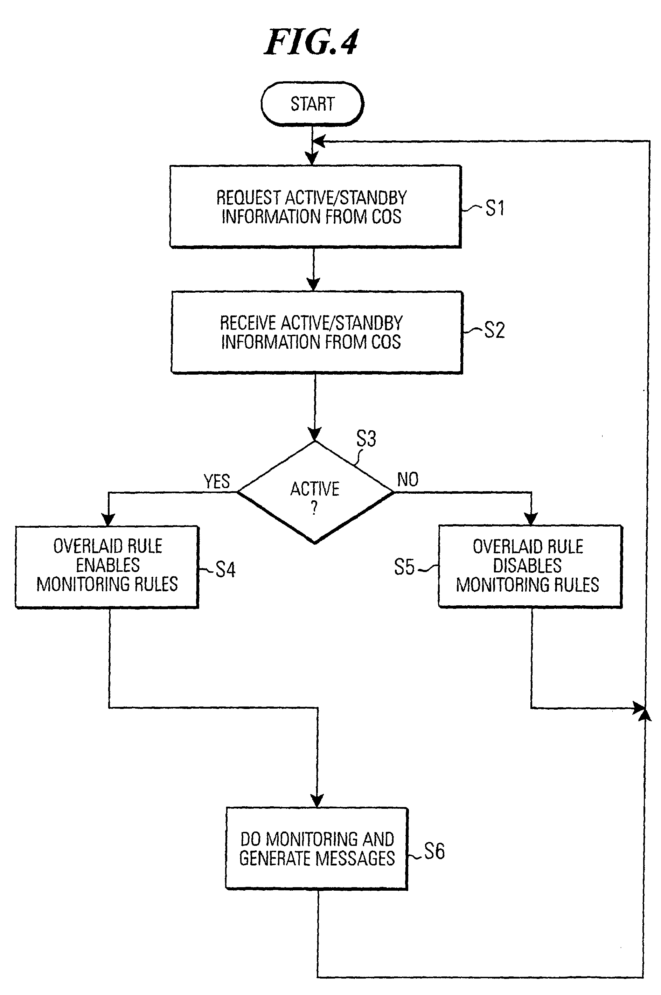

Fig. 2 illustrates the case of an HA cluster 3 with only one monitored cluster package 10 before (Fig. 2a) and after (Fig. 2b) a failover has been carried out. In the state before the failover, the cluster package 10 is active on the primary cluster node 4. It is inactive on the secondary node 5, but the secondary node 5 is ready to back it up from the primary node 4. An agent 11a is installed on the primary node 4, and another agent 11b is installed on the secondary node 5. A policy 13 for monitoring the cluster package 10 and an overlaid rule 22 are associated with each of the agents 11a, 11b. The policy 13 comprises monitoring rules, which define what and how to collect and how to generate monitoring messages. The overlaid rule 22 defines that no event collection and/or message generation shall be carried out when the associated cluster package is inactive. The cluster operating system 20 on the cluster controller 6 permanently checks the cluster package 10 on the active primary node 4 and resources on which the cluster package 10 depends for the appearance of a failover condition. The cluster operating system 20 also is in communication with the agents 11a, 11b. It is aware of on which one of the nodes 4, 5 the cluster package 10 is currently active and on which one it is inactive. There are two different embodiments of how the agents 11a, 11b can obtain this information pertaining to cluster-node activity (Fig. 4): According to a first embodiment, the agents a, 11b periodically send requests to the cluster operating system 20 which returns the requested activity/standby information. According to the other embodiment, the agents 11a, 11b are registered at the cluster operating system 20 once upon initialization, and then receive automatically a notification from the cluster operating system 20 when the activity/standby mode changes (and, optionally, also periodically status notifications). This second embodiment is preferred, however, it is not supported by all available cluster operating systems. In Fig. 2a, the agent 11a is notified (or informed by a response) that on its associated node 4 the cluster package 10 is active, whereas agent 11b is notified that on its associated node 5 the cluster package 10 is inactive. Accordingly, the overlaid rules 22 command the agent 11a to evaluate the monitoring rules defined in the policy 13 and the agent 11b not to evaluate these monitoring rules. Consequently the agent a of the node 4 on which the cluster package 10 is active generates monitoring messages 15, whereas agent 11b of the node 5 on which the cluster package 10 is inactive does not generate monitoring messages relating to the cluster package 10. The monitoring messages 15 generated by the active node's agent 11a are sent to the monitoring server 16 which uses them for monitoring the cluster 3. Thus, from outside the cluster 3 the messages 15 appear as if they came from a corresponding standard (non-cluster) node.

As mentioned above, the cluster operating system 20 checks the primary node 4 and the active cluster package 10 running on it for the appearance of a failover condition. Such a failover condition can be a failure of a hardware resource such as a LAN card, a hard disk, a CPU etc. Other failover conditions are software related. For instance, an electromagnetic interference, a program bug or a wrong command given by an operator may cause a program failure. Preferably, a failover condition is constituted not only of such serious failures, but already of errors which are forewarnings of a failure, such as a hardware performance degradation or the occurrence of an internal program variable with an invalid value. The cluster package 10 may be able to compensate for such errors and prevent the system from failing for a certain time so that the processing can be continued on the secondary node 5 practically interruption-free. The detection of such a hardware or software failure or error constitutes a failover condition. Upon its detection, the cluster controller 6 initiates the failover (indicated in Fig. 2a by an arrow). The secondary node 5 backs up the cluster package 10 automatically and transparently, without the need for administrator intervention or client manual reconnection. In the second embodiment, the agents 11a and 11b are notified by the cluster operating system 20 that a failover of the cluster package 10 from the primary node 4 to the secondary node 5 is carried out. In the first embodiment this information is only requested from the cluster operating system 20 which causes a small delay corresponding on average to half the request period.

Fig. 2b illustrates the situation after the failover. Now, the cluster package is running on the secondary node 5. The secondary node's agent 11b generates monitoring messages 15 based on the notification by the cluster operating system 20. The cluster package 10 on the primary node 4 is now in an error state and, thus, inactive. Owing to the notification by the cluster operating system 20, the agent 11a generates no erroneous messages indicating that the cluster package 10 on the primary node 4 is now in an error state. After the errors or faults that caused the failover have been detected and diagnosed, recovery, repair and reconfiguration actions may take place. Then the reversed process of failover, which is termed failback, can be carried out. It consists basically of moving back the critical application 10 to the primary node 4, about which the agents 11a and 11b are again notified. Then, the original message generation state is also re-established.

Preferably, both agents 11a, 11b are permanently active in order to perform monitoring of the first and second nodes 4, 5 themselves, even if the cluster package 10 is inactive on the respective node. This provides information as to whether the respective node is able to back up the cluster package in the case of a failover.

The failover capability can also be used efficiently for another important purpose: maintenance. Maintenance actions can be performed on the primary node by switching over the critical application to the secondary node. On-line maintenance of that kind reduces or even eliminates the need for scheduled down times for maintenance tasks and software upgrades.

The failover process commonly includes a number of resources to be switched over to the standby node. For example, the network identity of the nodes is switched. Using the TCP/IP protocol, this involves to dynamically change the IP address associated with the primary node's network card to that of the secondary node's network card.

The policy 13 with monitoring rules defined by the user for the monitoring of the application (cluster package) 10 is the same as that the user would have to define for a corresponding monitoring of the same application running on a standard (non-cluster) node. The installation of the two agents 11a, 11b at the primary and secondary nodes 4, 5 together with the policies 13 assigned to them is carried out automatically by the monitoring server 16, when the data model of the monitored IT network is configured so as to include the HA cluster 3. In particular, the user does not have to enter the overlaid rules 22. But rather, this is also automatically done by the monitoring server 16 upon installation. The HA cluster 3 is thus transparent (e.g. it appears as a corresponding non-cluster node) for a user who configures the monitoring system 1.

Fig. 3 illustrates the case of an HA cluster 3' with two monitored cluster packages 10a' and 10b'. Although it is possible to host two or more cluster packages in an active/standby configuration corresponding to what is illustrated in Fig. 2, Fig. 3 shows an alternative in the form of an active/active configuration. Fig. 3a illustrates the state of the HA cluster 3' before and Fig. 3b after a failover has been carried out. The above description of Figs. 1 and 2 applies also to Fig. 3; the only differences are described below.

With the active/active configuration of Fig. 3, it is avoided that the secondary node is normally idle and serves only for backup purposes. Rather, both nodes are normally active: a first monitored cluster package 10a' runs on the primary node 4', and a second monitored cluster package 10b' runs on the secondary node 5'. The primary node 4' is prepared to back up the second cluster package 10b' from the secondary node 5' in the case of a failover. Likewise, the secondary node 5' is prepared to back up the first cluster package 10a' from the primary node 4' in the case of a failover (see Carreira, pages 102-103). A policy and an overlaid rule for each cluster package (here a policy 13a' and a monitoring rule 22a for the first cluster package 10a' and a policy 13b' and a monitoring rule 22b' for the second cluster package 10b') are associated with each of the agents 11a ' and 11b'. Thus, in the example of Fig. 3 with two cluster packages 10a', 10b', each agent 11a', 11b' has two policies 13a', 13b', although only one cluster package 10a' or 10b' runs on each of the first and second nodes 4', 5'. Each of the policies 13a', 13b' comprises, for each of the cluster packages 10a', 10b', a set of monitoring rules. In order to prevent the agents 11a' and 11b' from sending messages to the monitoring server 16 with regard to the one of the cluster packages 10b', 10a' which is intentionally not running on the respective node 4', 5', the primary node's agent 11a' generates monitoring messages 15a only with regard to the first cluster package 10a', but generates no monitoring messages with regard to the second cluster package 10b'. Correspondingly, the secondary node's agent 11b' generates monitoring messages 15b only with regard to the second cluster package 10b', but generates no monitoring messages with regard to the first cluster package 10a'. The mechanism for achieving that is the one described in connection with Fig. 2, however, the active/standby notifications or responses by the cluster operating system 20 are application-specific (of course, also in Fig. 2 the notifications or responses may be application-specific, although there is only one monitored cluster package).

In Fig. 3a, an arrow indicates that a failover is carried out in which the first cluster package 10a' is switched from the primary node 4' to the secondary node 5'. Owing to the bi-directional structure of the active/active configuration, a failover can also be carried out in the opposite direction, such that the second cluster package 10b' is switched from the secondary node 5' to the primary node 4'.

Fig. 3b illustrates the operating state of the cluster 3' after the failover indicated in Fig. 3a has been carried out. Both cluster packages 10a', 10b' now run on the secondary node 5', and the secondary node's agent 11b' generates monitoring messages 15a, 15b for both cluster packages 10a', 10b'. On the other hand, the cluster package 10a' does not run on the primary node 4' any more, and the primary node's agent 11a' generates no error messages reflecting the fact that neither of the cluster packages 10a', 10b' is running on the primary node 4'. After the fault which has caused the failover has been repaired, the normal operational state according to Fig. 3a is restored by a failback.

The bi-directional active/active cluster of Fig. 3 with two nodes can be extended to a system with 3, 4 ... N nodes, which is called an N-way cluster (see Carreira, pages 102-103). In such a system there may be a corresponding number of 3, 4 ... N agents and, for each agent, a number of policies which corresponds to 1, 2, 3...M times the total number of monitored cluster packages. The agents only generate monitoring messages with respect to the cluster package(s) running on the associated node, based on corresponding application-specific active/standby notifications or responses by the cluster operating system.

Fig. 4 illustrates a method carried out by each of the agents 11a, 11b, 11a', 11b' in Figs. 2 and 3. In step S1, the agent 11a, 11b requests and receives active/standby information from the cluster operating system 20. In step S2 the agent receives the active/standby information. In step S3, the agent ascertains whether the monitored cluster package on the associated cluster node 4, 5, 4', 5' is active. If the answer is positive (which is, for example, true for the agent 11a in the operating state of Fig. 2a and for the agent 11b in the state in Fig. 2b), in step S4 the overlaid rule 22 enables (or maintains enabled) the monitoring rules. If the answer is negative (which is, for example, true for the agent 11b in the operating state of Fig. 2a and for the agent 11a in the one of Fig. 2b), in step S5 the overlaid rule 22 disables (or maintains disabled) the monitoring rules. In step S6 the agent carries out the monitoring task and generates monitoring messages according to the monitoring rules 13, provided that they have been enabled by the overlaid rule 22 in step S4. Step S6 can be repeated several times. Then, the flow proceeds further with step S1, thus forming a quasi-endless monitoring loop. When a failover is carried out, the path carried out by the first node's agent 11a in Fig. 2a switches from S3-S4-S6 to S3-S5, whereas the path of the second node's agent 11b switches from S3-S6 to S3-S4-S6. Fig. 4 illustrates the request/response embodiment - in the registration/notification embodiment step S1 is omitted.

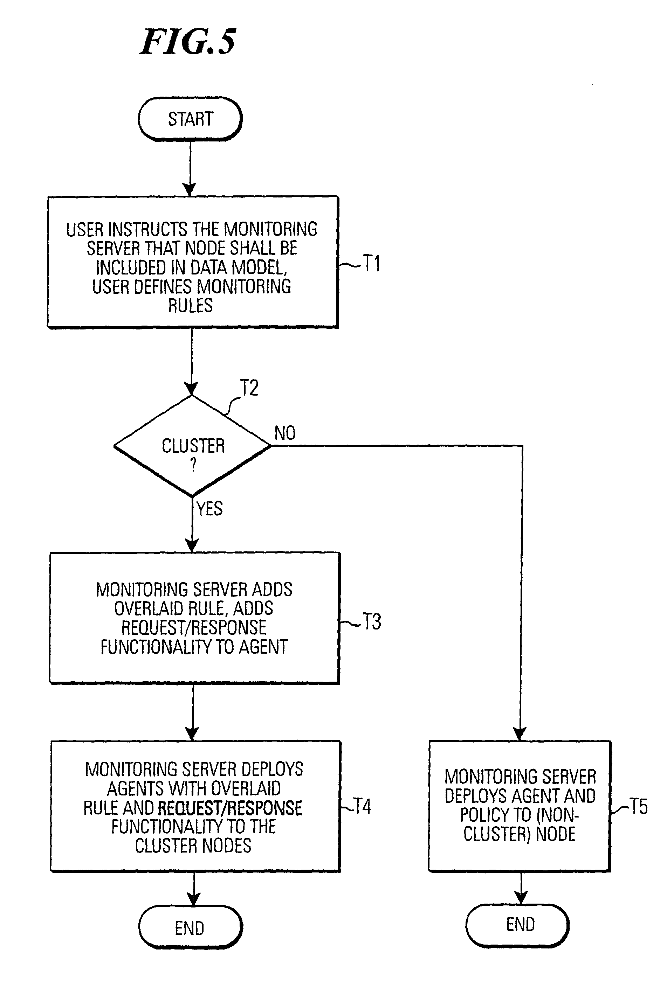

Fig. 5 illustrates a process in which agents, policies and overlaid rules are deployed by the monitoring server 16. In step T1, a user instructs the monitoring server 16 by means of the user interface 14 that a particular node (2 or 3) shall be included in the data model of the monitoring system 1. The user also defines a policy (monitoring rules) for that particular node. In step T2, the monitoring server 16 ascertains whether the node to be included is a standard (non-cluster) node, such as the node 2, or a cluster, such as the HA cluster 3. If the latter is true, in step T3 the monitoring server 16 adds the above-described request/response functionality to the agent software which is capable of monitoring the node and the critical application, and also adds the overlaid rule 22 to the standard policy 13. Then, in step T4, the monitoring server deploys (i.e. installs) the agent together with the policy and the overlaid rule on each of the cluster nodes 4, 5. If in step T2 it has turned out that the node to be included is a non-cluster node 2, then, in step T5, the monitoring server 16 deploys a standard agent with a standard policy to the node 2. Again, Fig. 5 illustrates the request/response embodiment - in the registration/notification embodiment, in steps T3 and T4 the "response/request functionality" is replaced by the "notification functionality", and a further step is included in the left-hand branch after step T2 (e.g. after step T4) in which the agents are registered at the cluster operating system. Thus, the system automatically takes into account whether or not a node is a cluster, when it deploys an agent to the node. In other words, for a user who wants to configure the monitoring system, a cluster is transparent i.e. can be configured like a non-cluster node.

Thus, a general purpose of the disclosed embodiments is to provide an improved method, computer system and computer program for monitoring services in an IT network with monitored clusters, in which no erroneous messages stemming from inactive cluster nodes have to be processed, no change to the cluster package software is required and wherein the user can define the policies in the same way as he could for a corresponding monitoring task in a non-cluster node.

## Claims

1. A method of installing monitoring agents (11) on monitored nodes (2, 4, 5) for monitoring objects within an information technological network (1), the network (1) having non-cluster nodes (2) and at least one high-availability cluster (3) comprising a first (4) and a second cluster nodes (5), wherein at least one cluster package (10) is arranged to run on the high-availability cluster (3), wherein a cluster operating system (20) initiates, when a failover condition is detected for the cluster package (10) at the first cluster node (4), a failover to the second cluster node (5) is initiated, and
wherein the monotoring agents (11) monitor the occurrence of events and generate event-related messages (15) for a monitoring server (16), wherein a first and second monitoring agents (11) associated with the first and second cluster nodes (4, 5) form a monitoring agent system of the cluster (3) the first and second agents (11) being arranged to receive information from the cluster operating system (20) indicating whether the cluster package (10) is currently active on the first or second cluster node (4, 5), respectively, wherein, depending on said information, the monitoring activity relating to the cluster package (10) is activated in the one of the first and second agents (11) associated with the cluster node (4, 5) on which the cluster package (10) is currently active and is de-activated in the other one;
the method comprising:
automatically adapting, upon installation, the monitoring agents (11) which are installed on the cluster nodes (4, 5) such that they are arranged to receive the cluster-package-activity information and exhibit said dependency of their monitoring activity on cluster-package-activity information, whereas the monitoring agents (11) which are installed on the non-cluster nodes (2) are arranged not to exhibit a dependency of their monitoring activity on cluster-package-activity.

2. The method of claim 1, wherein the agents (11) generate the messages (15) according to monitoring rules, wherein, if an agent (11) is installed on a cluster node (4, 5), at least one overlaid rule (22) pertaining to cluster package activity is automatically added, according to which the agent (11) does not evaluate the monitoring rules if the cluster-package-activity information indicates that the cluster package (10) is inactive on the cluster node (4, 5) with which the agent (11) is associated.

3. The method of claim 2, wherein the agents (11) generate messages according to monitoring rules which can be defined by a user, wherein, due to the automatic adaptation of the agents (11) upon the installation, the definition of monitoring tasks is the same for a monitored cluster (3) as for a non-cluster node (2).

4. The method of any one of claims 1 to 3, wherein, if an agent (11) is installed on a cluster node (4, 5), an interface to the cluster operating system (20) for the receipt of the cluster-package-activity information is automatically installed.

5. The method of any one of claims 1 to 4, wherein the agents (11) installed on cluster nodes (4, 5) are arranged to send requests for the cluster-package-activity information to the cluster operating system (20) and receive corresponding responses from it.

6. The method of any one of claims 1 to 4, wherein the agents (11) installed on cluster nodes (4, 5) are arranged to receive the cluster-package-activity information in the form of notifications from the cluster operating system (20) in at least one of the following ways: i) periodically, and ii) upon a change of the activity status of the cluster package (10).

7. A system for monitoring objects within an information technological network (1) including a monitoring server (16) and monitored nodes (2, 4, 5), comprising:
non-cluster nodes (2) and at least one high-availability cluster (3) comprising first and second cluster nodes (4, 5) and a cluster operating system (20) which initiates, when a failover condition is detected for a cluster package (10) running on the first cluster node (4), a failover to the second cluster node (5);
monitoring agents (11) which, when installed on the non-cluster nodes (2) or the cluster nodes (4, 5), monitor the occurrence of events and generate event-related messages (15) for the monitoring server (16), wherein first and second monitoring agents (11) installed on and associated with the cluster nodes (4, 5) form a monitoring agent system of the cluster (3), wherein the first and second agents (11) receive information from the cluster operating system (20) indicating whether the cluster package (10) is currently active on the associated cluster node (4, 5), wherein, depending on said information, the monitoring activity relating to the cluster package (10) is activated in the one of the first and second agents (11) which is associated with the cluster node (4, 5) on which the cluster package (10) is currently active and is de-activated in the other one,
wherein the agents (11) are automatically adapted, upon installation on a cluster node (4, 5), to receive the cluster-package-activity information and exhibit said dependency of their monitoring activity on cluster-package-activity information, but, upon installation on a non-cluster node (2), not to exhibit a dependency of their monitoring activity on cluster-package-activity.

8. The system of claim 7, wherein the agents (11) generate the messages (15) according to monitoring rules, wherein, if an agent (11) is installed on a cluster node (4, 5), at least one overlaid rule (22) pertaining to cluster package activity is automatically added, according to which the agent (11) does not evaluate the monitoring rules if the cluster-package-activity information indicates that the cluster package is inactive on the cluster node (4, 5) with which the agent (11) is associated.

9. The system of claim 8, wherein the agents (11) generate messages (15) according to monitoring rules which can be defined by a user, wherein, due to the automatic adaptation of the agent (11) upon the installation, the definition of monitoring tasks is the same for a monitored cluster (3) as for a non-cluster node (2).

10. The system of any one of claims 7 to 9, wherein the agents (11) installed on cluster nodes (4, 5) are arranged to send requests for the cluster-package-activity information to the cluster operating system (20) and receive corresponding responses from it.

11. The system of any one of claims 7 to 9, wherein the agents (11) installed on cluster nodes (4, 5) are arranged to receive the cluster-package-activity information in the form of notifications from the cluster operating system (20) in at least one of the following ways: i) periodically, and ii) upon a change of the activity status of the cluster package (10).

12. A computer program including program code for execution on a network (1) comprising a monitoring server (16) and monitored nodes (2, 4, 5), including non-cluster nodes (2) and at least one high-availability cluster (3) comprising first and second cluster nodes (4, 5) and a cluster operating system (20) which initiates, when a failover condition is detected for a cluster package (10) running on the first cluster node (4), a failover to the second cluster node (5),
said program code constituting, when installed on the non-cluster nodes (2) or the cluster nodes (4, 5), an agent (11) for monitoring the occurrence of events and generating event-related messages (15) for the monitoring server (16), wherein first and second agents (11), when installed on the cluster nodes (4, 5) of the cluster (3), form a monitoring agent system, wherein the first and second agents (11) receive information from the cluster operating system (20) indicating whether the cluster package (10) is currently active on the associated cluster node (4, 5), wherein, depending on said information, the monitoring activity relating to the cluster package (10) is activated in the one of the first and second agents (11) which is associated with the cluster node (4, 5) on which the cluster package (10) is currently active and is de-activated in the other one;
wherein the agents (11) are automatically configured, upon installation on a cluster node (4, 5), to receive the cluster-package-activity information and exhibit said dependency of their monitoring activity on cluster-package-activity information, but, upon installation on a non-cluster node (2), not to exhibit a dependency of their monitoring activity on cluster-package-activity.

13. The computer program of claim 12, wherein the agents (11) generate the messages (15) according to monitoring rules, wherein, if an agent (11) is installed on a cluster node (4, 5), at least one overlaid rule (22) pertaining to cluster package activity is able to be automatically be added, according to which the agent (11) does not evaluate the monitoring rules if the cluster-package-activity information indicates that the cluster package is inactive on the cluster node (4, 5) with which the agent (11) is associated.

14. The computer program of claim 13 , wherein the agents (11) generate messages (15) according to monitoring rules which can be defined by a user, wherein, due to the automatic configuration of the agent upon the installation, the definition of monitoring tasks is the same for a monitored cluster (3) as for a non-cluster node (2).

15. The computer program of any one of claims 12 to 15, wherein the agents (11) installed on cluster nodes (4, 5) are arranged to send requests for the cluster-package-activity information to the cluster operating system (20) and receive corresponding responses from it.

16. The computer program of any one of claims 12 to 15, wherein the agents (11) installed on cluster nodes (4, 5) are arranged to receive the cluster-package-activity information in the form of notifications from the cluster operating system (20) in at least one of the following ways: i) periodically, and ii) upon a change of the activity status of the cluster package (10).

## Patentansprüche

1. Verfahren zum Installieren von Überwachungsagenten (11) an überwachten Knoten (2, 4, 5) zum Überwachen von Objekten in einem informationstechnologischen (IT) Netzwerk (1), wobei das IT-Netzwerk (1) Nichtclusterknoten (2) und mindestens einen Hochverfügbarkeitscluster (3) aufweist, welcher einen ersten (4) und einen zweiten Clusterknoten (5) umfasst, wobei mindestens ein Clusterpaket (10) dazu eingerichtet ist, auf dem Hochverfügbarkeitscluster (3) zu laufen, wobei ein Clusterbetriebssystem (20), wenn eine Failover-Bedingung für das Clusterpaket (10) am ersten Clusterknoten (4) detektiert wird, einen Failover zum zweiten Clusterknoten (5) initiiert, und
wobei die Überwachungsagenten (11) das Auftreten von Ereignissen überwachen und ereignisbezogene Nachrichten (15) für einen Überwachungsserver (16) erzeugen, wobei ein erster und zweiter Überwachungsagent (11), welche dem ersten und zweiten Clusterknoten (3, 4) zugeordnet sind ein Überwachungsagentensystem des Clusters (3) bilden, wobei der erste und zweite Agent (11) des Überwachungsagentensystems dazu eingerichtet sind, Information von dem Clusterbetriebssystem (20) zu empfangen, welche angibt, ob das Clusterpaket (10) gegenwärtig auf dem ersten oder zweiten Clusterknoten (4, 5) aktiv ist, wobei in Abhängigkeit von dieser Information die auf das Clusterpaket (10) bezogene Überwachungsaktivität in demjenigen des ersten und zweiten, dem Clusterknoten (4, 5) zugeordneten Agenten (11) aktiviert wird, auf welchem das Clusterpaket (10) gegenwärtig aktiv ist, und auf dem anderen deaktiviert wird;
wobei das Verfahren folgendes umfasst:
bei der Installation, automatisches Anpassen der Überwachungsagenten (11), welche auf den Clusterknoten (4, 5) installiert werden, derart, dass sie zum Empfangen der Clusterpaketaktivitätsinformation eingerichtet sind und die Abhängigkeit ihrer Überwachungsaktivität von der Clusterpaketaktivitätsinformation aufweisen, wohingegen die Überwachungsagenten (11), welche auf den Nichtclusterknoten (2) installiert werden dazu eingerichtet sind, keine Abhängigkeit ihrer Überwachungsaktivität von Clusterpaketsaktivität aufzuweisen.

2. Verfahren nach Anspruch 1, wobei die Agenten (11) die Nachrichten (15) gemäß Überwachungsregeln erzeugen, wobei, falls ein Agent (11) auf einem Clusterknoten (4, 5) installiert wird, wenigstens eine die Clusterpaketsaktivität betreffende, überlagerte Regel (22) automatisch hinzugefügt wird, gemäß welcher der Agent (11) nicht die Überwachungsregeln auswertet, falls die Clusterpaketsaktivitätsinformation anzeigt, dass das Clusterpaket (10) auf dem Clusterknoten (4, 5) inaktiv ist, welchem der Agent (11) zugeordnet ist.

3. Verfahren nach Anspruch 2, wobei die Agenten (11) Nachrichten gemäß Überwachungsregeln erzeugen, welche von einem Nutzer definiert werden können, wobei aufgrund der automatischen Anpassung der Agenten (11) bei der Installation die Definition von Überwachungsaufgaben für einen überwachten Cluster (3) dieselbe wie für einen Nichtclusterknoten (2) ist.

4. Verfahren nach einem der Ansprüche 1 bis 3, wobei, falls ein Agent (11) auf einem Clusterknoten (4, 5) installiert wird, eine Schnittstelle zum Clusterbetriebssystem (20) für den Empfang der Clusterpaketaktivitätsinformation automatisch installiert wird.

5. Verfahren nach einem der Ansprüche 1 bis 4, wobei die auf Clusterknoten (4, 5) installierten Agenten (11) dazu eingerichtet sind, Abfragen der Clusterpaketsaktivitätsinformation an das Clusterbetriebssystem (20) zu senden und entsprechende Antworten von diesem zu empfangen.

6. Verfahren nach einem der Ansprüche 1 bis 4, wobei die auf Clusterknoten (4, 5) installierten Agenten (11) dazu eingerichtet sind, die Clusterpaketaktivitätsinformation in Form von Meldungen von dem Clusterbetriebssystem (20) auf wenigstens eine der folgenden Arten zu empfangen: i) periodisch und ii) auf einen Wechsel des Aktivitätsstatus des Clusterpakets (10) hin.

7. System zum Überwachen von Objekten innerhalb eines informationstechnologischen Netzwerks (1), welches einen Überwachungsserver (16) und überwachte Knoten (2, 4, 5) einschließt, umfassend:
Nichtclusterknoten (2) und mindestens einen Hochverfügbarkeitscluster (3), welcher einen ersten und zweiten Clusterknoten (4, 5) und ein Clusterbetriebssystem (20) umfasst, welches, wenn eine Failover-Bedingung für ein auf dem ersten Clusterknoten (4) laufendes Clusterpaket (10) detektiert wird, einen Failover zum zweiten Clusterknoten (5) initiiert;
Überwachungsagenten (11), welche, wenn sie auf den Nichtclusterknoten (2) oder den Clusterknoten (4, 5) installiert sind, das Auftreten von Ereignissen überwachen und ereignisbezogene Nachrichten (15) für den Überwachungsserver (16) erzeugen, wobei erste und zweite, auf den Clusterknoten (4, 5) installierte und ihnen zugeordnete Überwachungsagenten (11) ein Überwachungsagentensystem des Clusters (3) bilden, wobei die ersten und zweiten Agenten (11) Information von dem Clusterbetriebssystem (20) empfangen, welche anzeigt, ob das Clusterpaket (10) gegenwärtig auf dem zugehörigen Clusterknoten (4, 5) aktiv ist, wobei in Abhängigkeit von der Information die auf das Clusterpaket (10) bezogene Überwachungsaktivität in demjenigen des ersten und zweiten, dem Clusterknoten (4, 5) zugeordneten Agenten (11) aktiviert ist, auf welchem das Clusterpaket (10) gegenwärtig aktiv ist, und auf dem anderen deaktiviert ist,
wobei die Agenten (11) bei Installation auf einem Clusterknoten (4, 5) automatisch dazu angepasst werden die Clusterpaketaktivitätsinformation zu empfangen und die Abhängigkeit ihrer Überwachungsaktivität von Clusterpaketaktivitätsinformation aufzuweisen, aber bei Installation auf einem Nichtclusterknoten (2) nicht keine Abhängigkeit ihrer Überwachungsaktivität von Clusterpaketaktivität aufzuweisen.

8. System nach Anspruch 7, wobei die Agenten (11) die zu Überwachungsregeln gehörigen Nachrichten (15) erzeugen, wobei, falls ein Agent (11) auf einem Clusterknoten (4, 5) installiert ist, wenigstens eine die Clusterpaketaktivität betreffende, überlagerte Regel (22) automatisch hinzugefügt wird, gemäß welcher der Agent (11) nicht die Überwachungsregeln auswertet, falls die Clusterpaketaktivitätsinformation anzeigt, dass das Clusterpaket auf dem Clusterknoten (4, 5), welchem der Agent (11) zugeordnet ist, inaktiv ist.

9. System nach Anspruch 8, wobei die Agenten (11) Nachrichten (15), welche Überwachungsregeln zugeordnet sind, welche durch einen Nutzer definiert werden können, erzeugen, wobei aufgrund der automatischen Anpassung des Agenten (11) nach Installation die Definition von Überwachungsaufgaben für einen überwachten Cluster (3) dieselbe wie für einen Nichtclusterknoten (2) ist.

10. System nach einem der Ansprüche 7 bis 9, wobei die auf Clusterknoten (4, 5) installierten Agenten (11) dazu eingerichtet sind, Abfragen der Clusterpaketaktivitätsinformation an das Clusterbetriebssystem (20) zu senden und entsprechende Antworten von diesem zu empfangen.

11. System nach einem der Ansprüche 7 bis 9, wobei die auf Clusterknoten (4, 5) installierten Agenten (11) dazu eingerichtet sind, die Clusterpaketaktivitätsinformation in Form von Meldungen von dem Clusterbetriebssystem (20) auf wenigstens eine der folgenden Arten zu empfangen: i) periodisch und ii) auf einen Wechsel des Aktivitätsstatus des Clusterpakets (10) hin.

12. Computerprogramm, umfassend Programmcode zur Ausführung auf einem Netzwerk (1), welches einen Überwachungsserver (16) und überwachte Knoten (2, 4, 5), umfasst, welche einschließlich Nichtclusterknoten (2) und wenigstens einen Hochverfügbarkeitscluster (3) umfassen, der einen ersten und zweiten Clusterknoten (4, 5) und ein Clusterbetriebssystem (20) umfasst, welches, wenn eine Failover-Bedingung für ein auf dem ersten Clusterknoten (4) betriebenes Clusterpaket (10) detektiert wird, einen Failover zum den zweiten Clusterknoten (5) initiiert,
wobei der Programmcode, wenn er auf den Nichtclusterknoten (2) oder den Clusterknoten (4, 5) installiert ist, einen Agenten (11) zum Überwachen des Auftretens von Ereignissen und zum Erzeugen ereignisbezogener Nachrichten (15) für den Überwachungsserver (16) darstellt, wobei der erste und zweite Agent (11), wenn sie auf den Clusterknoten (4, 5) des Clusters (3) installiert sind, ein Überwachungsagentensystem bilden, wobei der erste und zweite Agent (11) Information von dem Clusterbetriebssystem (20) empfangen, welche anzeigt, ob das Clusterpaket (10) gegenwärtig auf dem zugehörigen Clusterknoten (4, 5) aktiv ist, wobei in Abhängigkeit von der Information die auf das Clusterpaket (10) bezogene Überwachungsaktivität in demjenigen des ersten und zweiten, dem Clusterknoten (4, 5) zugeordneten Agenten (11) aktiviert wird, auf welchem das Clusterpaket (10) gegenwärtig aktiv ist, und auf dem anderen deaktiviert wird;
wobei die Agenten (11) bei Installation auf einem Clusterknoten (4, 5) automatisch dazu konfiguriert werden, die Clusterpaketaktivitätsinformation zu empfangen und die Abhängigkeit der Überwachungsaktivität von Clusterpaketaktivitätsinformation aufzuweisen, aber bei Installation auf einem Nichtclusterknoten (2) keine Abhängigkeit ihrer Überwachungsaktivität vom Clusterpaketaktivität aufzuweisen.

13. Computerprogramm nach Anspruch 12, wobei die Agenten (11) die Nachrichten (15) gemäß Überwachungsregeln erzeugen, wobei, falls ein Agent (11) auf einem Clusterknoten (4, 5) installiert ist, wenigstens eine die Clusterpaketaktivität betreffende überlagerte Regel (22) automatisch hinzugefügt werden kann, gemäß welcher der Agent (11) nicht die Überwachungsregeln auswertet, falls die Clusterpaketaktivitätsinformation anzeigt, dass das Clusterpaket auf dem Clusterknoten (4, 5), welchem der Agent (11) zugeordnet ist, inaktiv ist.

14. Computerprogramm nach Anspruch 13, wobei die Agenten (11) Nachrichten (15) erzeugen, welche Überwachungsregeln zugeordnet sind, welche durch einen Nutzer definiert werden können, wobei aufgrund der automatischen Konfiguration des Agenten nach Installation die Definition von Überwachungsaufgaben für einen überwachten Cluster (3) dieselbe wie für einen Nichtclusterknoten (2) ist.

15. Computerprogramm nach einem der Ansprüche 12 bis 15, wobei die auf Clusterknoten (4, 5) installierten Agenten (11) dazu eingerichtet sind, Abfragen der Clusterpaketaktivitätsinformation an das Clusterbetriebssystem (20) zu senden und entsprechende Antworten von diesem zu empfangen.

16. Computerprogramm nach einem der Ansprüche 12 bis 15, wobei die auf Clusterknoten (4, 5) installierten Agenten (11) dazu eingerichtet sind, die Clusterpaketaktivitätsinformation in Form von Meldungen von dem Clusterbetriebssystem (20) auf wenigstens eine der folgenden Arten zu empfangen: i) periodisch und ii) auf einen Wechseln des Aktivitätsstatus des Clusterpakets (10) hin.

## Revendications

1. Procédé d'installation d'agents (11) de surveillance sur des noeuds (2, 4, 5) surveillés, pour la surveillance d'objets à l'intérieur d'un réseau (1) de technologie de l'information, le réseau (1) ayant des noeuds (2) non liés à un groupe et au moins un noeud (3) à haute disponibilité, comprenant des premier (4) et second (5) noeuds de groupe, dans lequel au moins un progiciel (10) de groupe est agencé pour opérer sur le groupe (3) à haute disponibilité, dans lequel un système (20) qui opère sur un groupe lance une instruction, lorsqu'une condition de permutation est détectée sur le progiciel (10) de groupe au niveau du premier noeud (4) de groupe, qui initie une permutation vers le second noeud (5) de groupe, et
dans lequel les agents (11) de surveillance détectent l'occurrence d'un événement et génèrent des messages (15) relatifs à l'événement pour un serveur (16) de surveillance, dans lequel des premier et second agents (11) de surveillance associés aux premier et second noeuds (4, 5) de groupe forment un système d'agents de surveillance du groupe (3), les premier et second agents (11) étant agencés pour recevoir l'information provenant du système (20) de fonctionnement du groupe qui indique si le progiciel (10) de groupe est couramment actif sur les premier et second noeuds (4, 5) de groupe respectivement, dans lequel, en fonction de ladite information, l'activité de surveillance relative au progiciel (10) de groupe est activée sur l'un des premier et second agents (11) associés aux noeuds (4, 5) de groupe, sur lequel le progiciel (10) de groupe est couramment actif sur l'un et désactivé sur l'autre ;
le procédé comprenant :
l'adaptation automatique, en cours d'installation, des agents (11) de surveillance installés sur les noeuds (4, 5) de groupe, de manière à ce qu'ils soient agencés pour recevoir l'information d'activité du progiciel de groupe, grâce à quoi les agents (11) de surveillance qui sont installés sur les noeuds (2) non liés à un groupe sont agencés pour ne pas présenter une dépendance de leur activité de surveillance par rapport à l'activité du progiciel de groupe.

2. Procédé selon la revendication 1, dans lequel les agents (11) génèrent les messages (15) selon des règles de surveillance, selon lesquelles si un agent (11) est installé sur un noeud (4, 5) de groupe, au moins une règle (22) en vigueur concernant l'activité du progiciel de groupe est ajoutée automatiquement, d'après laquelle l'agent (11) n'évalue pas les règles de surveillance si l'information d'activité du progiciel de groupe indique que le progiciel (10) de groupe est inactif sur le noeud (4, 5) de groupe auquel l'agent (11) est associé.

3. Procédé selon la revendication 2, dans lequel les agents (11) génèrent des messages selon des règles de surveillance qui peuvent être définies par l'utilisateur, dans lequel, du fait de l'adaptation automatique des agents (11) au cours de l'installation, la définition des tâches de surveillance est la même pour un groupe surveillé (3) comme pour un noeud (2) non lié à un groupe.

4. Procédé selon l'une quelconque des revendications 1 à 3, dans lequel, si un agent (11) est installé sur un noeud (4, 5) de groupe, une interface avec le système (20) qui opère sur le groupe pour la réception de l'information d'activité de progiciel de groupe est installée automatiquement.

5. Procédé selon l'une quelconque des revendications 1 à 4, dans lequel les agents (11) installés sur des noeuds (4, 5) de groupe sont agencés pour envoyer des demandes d'information d'activité du progiciel de groupe au système (20) qui opère sur le groupe et pour en recevoir des réponses correspondantes.

6. Procédé selon l'une quelconque des revendications 1 à 4, dans lequel les agents (11) installés sur des noeuds (4, 5) de groupe sont agencés pour recevoir l'information d'activité du progiciel de groupe sous la forme d'une notification provenant du système (20) qui opère sur le groupe selon au moins l'un des modes suivants : i) périodiquement, et ii) au cours d'un changement du statut d'activité du progiciel (10) de groupe.

7. Système de surveillance d'objets à l'intérieur d'un réseau (1) de technologie de l'information comprenant un serveur (16) de surveillance et des noeuds (2, 4, 5) surveillés comprenant :
des noeuds (2) non liés à un groupe et au moins un groupe (3) à haute disponibilité incluant des premier et second noeuds (4, 5) de groupe et un système (20) qui opère sur un groupe et qui initie, lors de la détection d'une condition de permutation d'un progiciel (10) de groupe exécuté sur le premier noeud (4) de groupe, une permutation sur le second noeud (5) de groupe ;
des agents (11) de surveillance qui, une fois installés sur les noeuds (2) non liés à un groupe ou sur les noeuds (4, 5) de groupe, surveillent l'occurrence d'événements et génèrent des messages (15) relatifs à ces événements pour le serveur (16) de surveillance, dans lequel les premier et second agents (11) de surveillance installés sur et associés aux noeuds (4, 5) de groupe forment un système d'agents de surveillance du groupe (3),
dans lequel les premier et second agents (11) reçoivent des informations du système (20) qui opère sur le groupe indiquant si le progiciel (10) de groupe est couramment actif sur le noeud (4, 5) de groupe associé, dans lequel en fonction de ladite information l'activité de surveillance relative au progiciel (10) de groupe est activée sur l'un des premier et second agents (11) associé au noeud (4, 5) du groupe sur lequel le progiciel (10) de groupe est couramment actif et désactivé sur l'autre,
dans lequel les agents (11) sont automatiquement adaptés, en cours d'installation sur le noeud (4, 5) de groupe, pour recevoir une information d'activité du progiciel de groupe et pour présenter ladite dépendance de leur activité de surveillance à l'information d'activité de progiciel de groupe, mais qui au cours de l'installation d'un noeud (2) non lié à un groupe ne présente pas de dépendance par rapport à leur activité de surveillance sur l'activité du progiciel de groupe.

8. Système selon la revendication 7, dans lequel les agents (11) génèrent les messages (15) selon des règles de surveillance, dans lequel si un agent (11) est installé sur un noeud (4, 5) de groupe, au moins une règle (22) en vigueur, relative à l'activité du progiciel de groupe, est ajoutée automatiquement, selon laquelle l'agent (11) n'évalue pas les règles de surveillance si l'information de l'activité du progiciel de groupe indique que le progiciel de groupe est inactif sur le noeud (4, 5) du groupe avec lequel l'agent (11) est associé.

9. Système selon la revendication 8, dans lequel les agents (11) génèrent des messages (15) selon des règles de surveillance qui peuvent être définies par l'utilisateur, dans lequel, du fait de l'adaptation automatique de l'agent (11) au cours de l'installation, la définition des tâches de surveillance est la même pour un groupe (3) surveillé et pour un noeud (2) non lié à un groupe.

10. Système selon l'une quelconque des revendications 7 à 9, dans lequel les agents (11) installés sur des noeuds (4, 5) de groupe sont agencés pour envoyer des demandes d'information d'activité de progiciel de groupe au système (20) qui opère sur le groupe et en reçoit des réponses correspondantes.

11. Système selon l'une quelconque des revendications 7 à 9, dans lequel les agents (11) installés sur des noeuds (4, 5) de groupe sont agencés pour recevoir l'information d'activité du progiciel de groupe sous la forme de notifications provenant du système (20) de fonctionnement de groupe selon l'un au moins des modes suivants : i) périodiquement, et ii) lors d'un changement du statut d'activité du progiciel (10) de groupe.

12. Programme d'ordinateur comprenant un code de programme d'exécution sur un réseau (1) incluant un serveur (16) de surveillance et des noeuds (2, 4, 5) surveillés, comprenant des noeuds (2) non liés à un groupe et au moins un groupe (3) à haute disponibilité comprenant des premier et second noeuds (4, 5) de groupe et un système (20) opérationnel qui initie, lorsqu'une condition de permutation est détectée pour un progiciel (10) de groupe exécuté sur le premier noeud (4) de groupe, une permutation sur le second noeud (5) de groupe,
ledit code de programme constituant, une fois installé sur le noeud (2) non lié à un groupe ou sur des noeuds (4, 5) de groupe, un agent (11) pour surveiller l'occurrence d'événements et pour générer des messages (15) relatifs à ces événements pour le serveur (16) de surveillance, dans lequel les premier et second agents (11) une fois installés sur les noeuds (4, 5) du groupe (3) forment un système d'agents de surveillance, dans lequel les premier et second agents (11) reçoivent des informations du système (20) de fonctionnement du groupe indiquant si le progiciel (10) est couramment actif sur le noeud (4, 5) de groupe associé, dans lequel, en fonction de ladite information, l'activité de surveillance relative au progiciel (10) de groupe est activée dans l'un des premier et second agents (11) associé au noeud (4, 5) de groupe sur lequel le progiciel (10) de groupe est couramment actif, et il est désactivé sur l'autre ;
dans lequel les agents (11) sont configurés automatiquement, au cours de l'installation sur un noeud (4, 5) de groupe, pour recevoir une information d'activité de progiciel de groupe et pour présenter ladite dépendance de leur activité de surveillance par rapport à l'information d'activité de progiciel de groupe, mais qui au cours de l'installation d'un noeud (2) non lié à un groupe ne doit pas présenter une dépendance par rapport à leur activité de surveillance par rapport à l'activité du progiciel de groupe.

13. Programme d'ordinateur selon la revendication 12, dans lequel les agents (11) génèrent les messages (15) en fonction de règles de surveillance, dans lequel si un agent (11) est installé sur un noeud (4, 5) de groupe, au moins une règle (22) en vigueur, relative à l'activité du progiciel de groupe, peut être ajoutée automatiquement, selon laquelle l'agent (11) n'a pas à évaluer les règles de surveillance si l'information de l'activité du progiciel de groupe indique que le progiciel de groupe est inactif sur le noeud (4, 5) du groupe avec lequel l'agent (11) est associé.

14. Programme d'ordinateur selon la revendication 13, dans lequel les agents (11) génèrent des messages (15) en fonction de règles de surveillance qui peuvent être définies par l'utilisateur, dans lequel, du fait de la configuration automatique de l'agent (11) au cours de l'installation, la définition des tâches de surveillance est la même pour un groupe (3) surveillé comme pour un noeud (2) non lié à un groupe.

15. Programme d'ordinateur selon l'une quelconque des revendications 12 à 15, dans lequel les agents (11) installés sur des noeuds (4, 5) de groupe sont agencés pour envoyer des demandes d'informations d'activité de progiciel de groupe au système (20) de fonctionnement de groupe et pour en recevoir des réponses correspondantes.

16. Programme d'ordinateur selon l'une quelconque des revendications 12 à 15, dans lequel les agents (11) installés sur des noeuds (4, 5) de groupe sont agencés pour recevoir l'information d'activité de progiciel de groupe sous la forme de notifications provenant du système (20) de fonctionnement de groupe selon au moins un des modes suivants : i) périodiquement, et ii) au cours d'un changement de statut d'activité du progiciel (10) de groupe.
